# EUROPÄISCHE PATENTSCHRIFT

(11) **EP 1 146 263 B1**
(45) Veröffentlichungstag und Bekanntmachung des Hinweises auf die Patenterteilung: **02.02.2005**
(21) Anmeldenummer: 01890089.4
(22) Anmeldetag: 21.03.2001
(51) Int. Cl.: F16J 15/18

(54) **Dichtring-Packung**
Ring packing
Garniture d'étanchéité

(30) Priorität: 10.04.2000 AT 6022000
(43) Veröffentlichungstag der Anmeldung: 17.10.2001
(73) Patentinhaber: Hoerbiger Kompressortechnik Holding GmbH, 1040 Wien (AT)
(72) Erfinder: Radcliffe, Christopher David, Dr., Leeds LS18 5ED (GB)
(74) Vertreter: Pinter, Rudolf, Dipl.-Ing.

(56) Entgegenhaltungen:
- DE-C- 468 847
- DE-C- 853 995
- US-A- 2 486 939
- US-A- 3 523 691
- US-A- 5 082 294
- US-A- 5 873 575

## Beschreibung

Die Erfindung betrifft eine Dichtring-Packung, insbesonders für die Abdichtung der Durchführung der hin- und hergehenden Kolbenstange eines Hubkolben-Kompressors, mit einem in eine Stopfbüchsen-Bohrung einsetzbaren, zumindest eine, gegen den abzudichtenden bewegten Bauteil angepresste, im wesentlichen ringförmige Gleitdichtung aufnehmenden gekühlten Packungsgehäuse.

Die zumeist aus mehreren zusammengebauten Teilen bestehenden Packungsgehäuse derartiger Packungen sind bis jetzt immer mit Wasser bzw. einer anderen geeigneten, umlaufenden Kühlflüssigkeit gekühlt, um die bei der Relativbewegung zwischen dem abzudichtenden Bauteil und der im Gehäuse gehaltenen Gleitdichtung entstehende Reibungswärme abzuführen und damit unzulässige Temperaturerhöhungen, die zu verstärkter Abnutzung und entsprechender Verkürzung der Lebensdauer der Dichtungen bzw. zu einem Versagen derselben führen würden, zu vermeiden Aus der DE 853 995 ist eine Packung der gattungsgemäßen Art bekannt. Abgesehen von den zusätzlichen diesbezüglichen Aufwendungen können damit aber auch Probleme entstehen, wenn beispielsweise Kühlmittel durch gealterte Abdichtungen oder Spalte zwischen den Teilen des Packungsgehäuses in den Kompressor und damit in den Prozess gelangt.

Aufgabe der vorliegenden Erfindung ist es, die genannten Nachteile der bekannten derartigen Dichtring-Packungen zu vermeiden, die Konstruktion zu vereinfachen und insbesonders dafür zu sorgen, dass keine Gefahr besteht, dass Kühlmittel in den Prozess, der von einem entsprechend abgedichteten Kompressor mit Druckmittel versorgt wird, gelangen kann.

Die Erfindung geht davon aus, dass beides einfachsten erreicht wird, wenn ohne separate aktive Kühlmittelumlauf-Kühlung im Bereich der Dichtring-Packung gearbeitet werden kann, was aber andererseits nur möglich ist, wenn die Reibungswärme aus der Packung auf andere Weise abgeführt wird, da es ansonsten zu einer stetigen Temperaturerhöhung in diesem Bereich kommen muss. Gelöst wird die genannte Aufgabe der Erfindung demgemäss dadurch, dass das Packungsgehäuse an seinem Außenumfang zumindest eine im eingesetzten Zustand bis zur Anlage am Innenumfang der Stopfbüchsen-Bohrung erweiterbare Wärmeübertragungs-Hülse aufweist und davon abgesehen nicht separat gekühlt ist. Es erfolgt damit ein direkter thermischer Kontakt zwischen zumindest Teilen der Packungsaußenfläche und den umgebenden, üblicherweise ohnedies mit dem Kompressorzylinder oder ähnlichen Bauteilen gekühlten Stopfbüchsenwänden. Diese Wände haben aus konstruktiven Gründen allerdings stets einen kleinen Luftspalt im Bereich von etwa 0,25 mm Dicke zu den Außenwänden des Packungsgehäuses, um ein Einsetzen der Packung in die Stopfbüchsen-Bohrung zu ermöglichen. Gemäß der Erfindung ist nun an der Außenseite des Packungsgehäuses eine nach dem Einsetzen in die Stopfbüchsen-Bohrung unter bleibendem thermischen Kontakt mit dem Packungsgehäuse im Durchmesser ausdehnbare Hülse vorgesehen, über welche der benötigte gute, direkte Kontakt zur Wärmeübertragung von der Packung auf die gekühlte Stopfbüchsenwandung möglich ist.

Bedarfsweise können natürlich entsprechend große Wärmeübergänge bzw. Wärmeübergangsflächen im benötigten Bereich durch Vergrößerung der Hülsenlänge bzw. Erhöhung der Anzahl der einzelnen auf dem Packungsgehäuse vorgesehenen Hülsen erreicht werden.

Nach einer besonders bevorzugten Ausgestaltung der Erfindung ist die Wärmeübertragungs-Hülse als einseitig geschlitzter Ring mit im wesentlichen kegelstumpfförmigem Innenumfang ausgebildet und auf einem entsprechend schräg verlaufenden Außenumfangsbereich, vorzugsweise in einer umlaufenden Vertiefung des Packungsgehäuses, angeordnet, wobei diese Hülse von außen, vorzugsweise mittels parallel zur Achse angreifender, über den Umfang verteilter Spannschrauben, unter radialer Aufweitung axial gegenüber dem Packungsgehäuse verschieblich ist. Dies ergibt eine sehr einfache Herstellung und Montage der Packung, wobei über die Axialverschiebung der Wärmeübertragungs-Hülse nach der Montage der Packung eine sehr einfache Aktivierung des direkten Wärmeüberganges zwischen Packung und Stopfbüchsenwandung erfolgen kann.

Nach einer weiteren Ausgestaltung der Erfindung kann bei einem aus mehreren, im wesentlichen scheibenförmigen Gehäuseteilen zusammengebauten Packungsgehäuse die Wärmeübertragungs-Hülse auf einem mittleren, vorzugsweise gegenüber den benachbarten Gehäuseteilen im Radius kleineren, Gehäuseteil angeordnet sein. Damit können auf sehr einfache Weise auch bereits im Einsatz befindliche Dichtring-Packungen nachgerüstet werden, indem nur der die Wärmeübertragungs-Hülse tragende mittlere Teil ausgetauscht wird. Auch können auf diese Weise je nach Bedarf mehrere derartige Wärmeübertragungs-Hülsen eingesetzt werden, solange nur sichergestellt bleibt, dass diese Hülsen nach dem Einbau der Packung auch entsprechend aufgeweitet werden können.

Das Packungsgehäuse und die Wärmeübertragungs-Hülse bestehen gemäß einer weiteren bevorzugten Ausbildung der Erfindung aus gut wärmeleitendem Material, vorzugsweise Kupferlegierungen. Damit kann auf einfache und zweckmäßige Weise die Wärmeableitung von den Gleitdichtungen in der Packung zur Stopfbüchsenwandung verbessert werden.

Die Wärmeübertragungs-Hülse ist in weiters bevorzugter Ausgestaltung der Eründung am Außenumfang des Packungsgehäuses so angeordnet, dass sie im eingebauten Zustand der Packung einem separat gekühlten Bereich der Stopfbüchsenwandung benachbart ist. Auf diese Weise wird der von der abzutransportierenden Wärme in der Stopfbüchsenwandung zurückzulegende Weg verkleinert und damit die Kühlung der Packung insgesamt weiter verbessert.

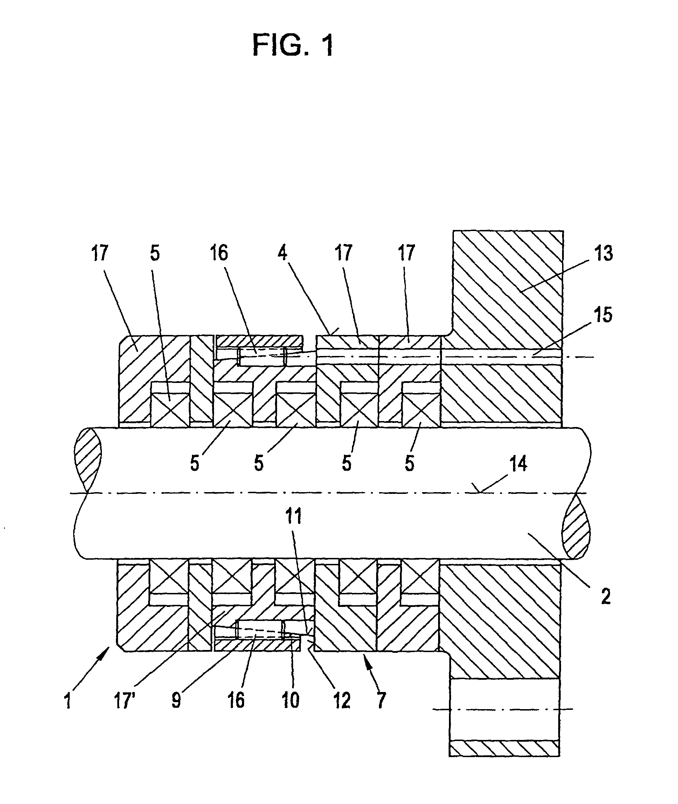

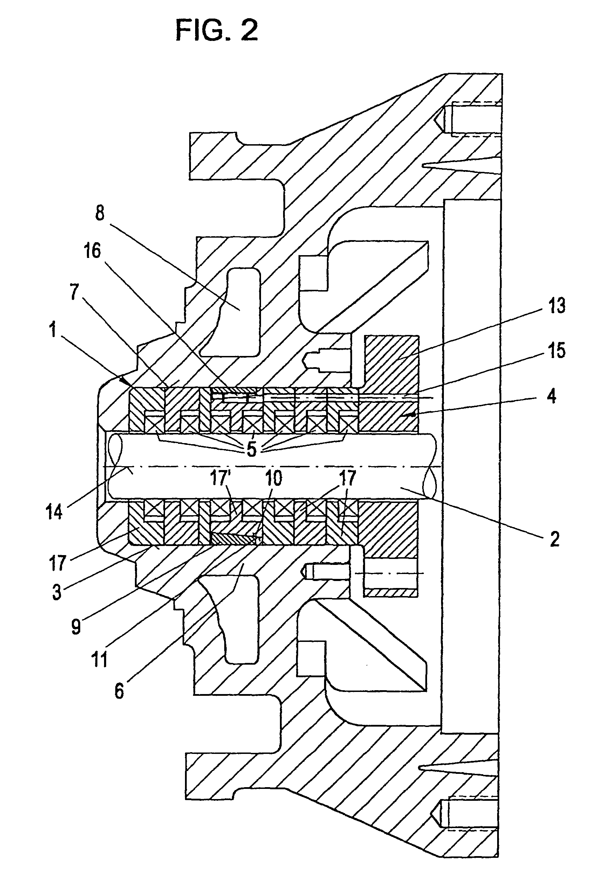

Die Erfindung wird im folgenden noch anhand der in der Zeichnung teilweise schematisch dargestellten Ausführungsbeispiele näher erläutert. Fig. 1 zeigt dabei einen Axialschnitt durch eine erfindungsgemäß ausgebildete Dichtring-Packung und Fig. 2 zeigt einen entsprechenden Schnitt durch ein weiteres Ausführungsbeispiel im in die Stopfbüchse eines nicht weiter dargestellten Kompressorzylinders eingesetzten Zustand.

Soweit wie möglich erfolgt im folgenden eine Beschreibung von Fig. 1 und Fig. 2 gleichzeitig - auf alle Fälle sind gleiche bzw. von der Funktion her gleichartige Bauteile mit gleichen Bezugszeichen in beiden Figuren versehen.

Die in beiden Figuren dargestellte Dichtring-Packung 1 dient zur Abdichtung der Durchführung der hin- und hergehenden Kolbenstange 2 eines nicht weiter dargestellten Hubkolben-Kompressors, wie er beispielsweise als Prozessverdichter für verschiedenste Gase eingesetzt wird. Die Packung 1 weist dabei ein in eine Stopfbüchsen-Bohrung 3 (siehe Fig. 2) einsetzbares Packungsgehäuse 4 auf, in dem hier mehrere einzeln gegen den abzudichtenden bewegten Bauteil (hier die Kolbenstange 2) angepresste, im wesentlichen ringförmige Gleitdichtungen 5 angeordnet sind. Die Art und spezielle Ausbildung dieser Gleitdichtungen 5 ist hier nicht weiter wesentlich - wesentlich ist nur, dass durch die Reibung relativ zur Kolbenstange 2 Reibungswärme entsteht, die aus dem Bereich der Dichtring-Packung 1 abgeführt werden muss, da es ansonsten im Betrieb der Anordnung zu einer unzulässigen Temperaturerhöhung mit den eingangs in diesem Zusammenhang bereits angesprochenen Problemen kommen würde.

Nachdem das Packungsgehäuse 4 aus Herstellungs- und Montagegründen einen geringen Luftspalt zur Stopfbüchsen-Bohrung 3 bzw. zum entsprechenden Innenumfang der Stopfbüchsenwandung 6 aufweisen muss, ist der direkte Wärmeübergang vom Außenumfang 7 des Packungsgehäuses 4 zur Stopfbüchsen-Bohrung 3 bzw. zur Stopfbüchsenwandung 6 und dem diese umgebenden Kühlraum 8 (siehe Fig. 2) stark behindert und reicht zumindest in der Regel nicht dazu aus, eine ausreichende Wärmeabfuhr von den Gleitdichtungen 5 im Betrieb der Anordnung sicherzustellen. Um nun nicht mit verschiedenen ebenfalls eingangs beschriebenen Nachteilen behaftete zusätzliche Flüssigkeitskühlungen in diesem Bereich vorsehen zu müssen, weist das Packungsgehäuse 4 eine, an seinem Außenumfang 7 im eingesetzten Zustand bis zur direkten Anlage am Innenumfang der Stopfbüchsen-Bohrung 3 erweiterbare Wärmeübertragungs-Hülse 9 auf und ist davon abgesehen nicht separat gekühlt. Diese Wärmeübertragungs-Hülse 9 ist als einseitig geschlitzter Ring mit im wesentlichen kegelstumpfförmigem Innenumfang 10 ausgebildet und auf einem entsprechend schräg verlaufenden Außenumfangsbereich 11, hier in einer umlaufenden Vertiefung 12 des Packungsgehäuses 4, angeordnet. Die Wärmeübertragungs-Hülse 9 ist von außen (in beiden Figuren von rechts vom Flansch 13 her) mittels parallel zur Achse 14 angreifender, über die Bohrung bzw. Bohrungen 15 betätigbarer Schrauben 16 unter radialer Aufweitung axial gegenüber dem Packungsgehäuse 4 verschieblich, womit der erwähnte (in Fig. 2 allerdings nicht dargestellte) Spalt zwischen Packungsgehäuse 4 und Stopfbüchsen-Bohrung 3 eliminiert und ein direkter Wärmeübergang vom Außenumfangsbereich 11 zur gekühlten Stopfbüchsenwandung 6 hergestellt wird.

Das Packungsgehäuse 4 besteht jeweils aus mehreren, im wesentlichen scheibenförmigen Gehäuseteilen 17, wobei hier nur ein mittlerer davon, gegenüber den benachbarten Gehäuseteilen im Radius kleinerer Gehäuseteil 17' (hier ausgebildet als sogenannter T-Cup) zur Aufnahme einer Wärmeübertragungs-Hülse 9 ausgebildet ist. Dieser mittlere Bereich 17' könnte auch mit größerer Breite ausgeführt sein, bzw. könnten auch mehrere, jeweils Wärmeübertragungs-Hülsen 9 tragende Bauteile vorgesehen sein, womit der Wärmeübergang bedarfsweise angepasst werden kann.

## Patentansprüche

1. Dichtring-Packung (1), insbesonders für die Abdichtung der Durchführung der hin- und hergehenden Kolbenstange eines Hubkolben-Kompressors, mit einem in eine Stopfbüchsen-Bohrung (3) einsetzbaren, zumindest eine, gegen den abzudichenden bewegten Bauteil (2) angepasste, im wesentlichen ringförmige Gleitdichtung (5) aufnehmenden gekühlten Packungsgehäuse (4), **dadurch gekennzeichnet**, **dass** das Packungsgehäuse (4) an seinem Außenumfang (7) zumindest eine im eingesetzten Zustand bis zur Anlage am Innenumfang der Stopfbüchsen-Bohrung (3) erweiterbare Wärmeübertragungs-Hülse (9) aufweist und davon abgesehen nicht separat gekühlt ist.

2. Dichtring-Packung nach Anspruch 1, **dadurch gekennzeichnet, dass** die Wärmeübertragungs-Hülse (9) als einseitig geschlitzter Ring mit im wesentlichen kegelstumpfförmigem Innenumfang (10) ausgebildet und auf einem entsprechend schräg verlaufenden Außenumfangsbereich (11), vorzugsweise in einer umlaufenden Vertiefung (12), des Packungsgehäuses (4) angeordnet ist und dass diese Hülse (9) von außen, vorzugsweise mittels parallel zur Achse (14) angreifender, über den Umfang verteilter Spannschrauben (16), unter radialer Aufweitung axial gegenüber dem Packungsgehäuse (4) verschieblich ist.

3. Dichtring-Packung nach Anspruch 1 oder 2, **dadurch gekennzeichnet, dass** bei einem aus mehreren, im wesentlichen scheibenförmigen Gehäuseteilen (17,17') zusammengebauten Packungsgehäuse (4) die Wärmeübertragungs-Hülse (9) auf einem mittleren, vorzugsweise gegenüber den benachbarten Gehäuseteilen (17) im Radius kleineren Gehäuseteil (17') angeordnet ist.

4. Dichtring-Packung nach einem oder mehreren der Ansprüche 1 bis 3, **dadurch gekennzeichnet, dass** das Packungsgehäuse (4) und die Wärmeübertragungs-Hülse (9) aus gut wärmeleitendem Material, vorzugsweise Kupferlegierungen, bestehen.

5. Dichtring-Packung nach einem oder mehreren der Ansprüche 1 bis 4, **dadurch gekennzeichnet, dass** die Wärmeübertragungs-Hülse (9) am Außenumfang (7) des Packungsgehäuses (4) so angeordnet ist, dass sie im eingebauten Zustand der Packung (1) einem separat gekühlten Bereich (8) der Stopfbüchsenwandung (6) benachbart ist.

## Claims

1. A ring packing (1), in particular for sealing the passage of the reciprocating piston rod of a reciprocating-piston compressor, having a cooled packing housing (4) which is capable of being inserted into a stuffing-box bore (3) and which receives at least one substantially annular sliding seal (5) adapted to the moved component (2) to be sealed, **characterized in that** the external periphery (7) of the packing housing (4) has at least one heat-transfer sleeve (9) enlargeable in the inserted state until coming to rest against the internal periphery of the stuffing-box bore (3) and, apart from this, the packing housing is not cooled separately.

2. A ring packing according to Claim 1, **characterized in that** the heat-transfer sleeve (9) is designed in the form of a ring slotted on one side with a substantially frustoconical internal periphery (10) and is arranged on an external peripheral region (11) - extending in a correspondingly oblique manner, preferably in a continuous depression (12) - of the packing housing (4), and the said sleeve (9) is axially displaceable from the outside with respect to the packing housing (4) with radial widening, preferably by means of tightening screws (16) engaging parallel to the axis (14) and distributed over the periphery.

3. A ring packing according to Claim 1 or 2, **characterized in that,** in the case of a packing housing (4) assembled from a plurality of substantially disc-shaped housing parts (17, 17'), the heat-transfer sleeve (9) is arranged on a middle housing part (17') which is preferably smaller in radius than the adjacent housing parts (17).

4. A ring packing according to one or more of Claims 1 to 3, **characterized in that** the packing housing (4) and the heat-transfer sleeve (9) consist of good thermally conductive material, preferably copper alloys.

5. A ring packing according to one or more of Claims 1 to 4, **characterized in that** the heat-transfer sleeve (9) is arranged on the external periphery (7) of the packing housing (4) in such a way that in the fitted state of the packing (1) it is adjacent to a separately cooled region (8) of the stuffing-box wall (6).

## Revendications

1. Garniture d'étanchéité annulaire (1), en particulier pour l'étanchement du passage d'une tige de piston mobile en va-et-vient d'un compresseur à pistons alternatifs, comportant une gaine de garniture (4) refroidie, susceptible d'être mise en place dans un perçage de presse-étoupe (3) et recevant au moins un joint coulissant (5) sensiblement annulaire, adapté par rapport au composant mobile (2) à étancher, **caractérisée en ce que** la gaine de garniture (4) comprend sur sa périphérie extérieure (7) au moins une douille de transfert thermique (9) susceptible d'être évasée dans l'état mis en place jusqu'à venir en appui contre la périphérie intérieure du perçage de presse-étoupe (3) et, à l'exception ladite douille, elle n'est pas refroidie séparément.

2. Garniture d'étanchéité annulaire selon la revendication 1, **caractérisée en ce que** la douille de transfert thermique (9) est réalisée sous forme de bague fendue unilatéralement et présentant une périphérie intérieure (10) sensiblement en forme tronconique, et est agencée sur une zone de périphérie extérieure (11) s'étendant avec une inclinaison correspondante, de préférence dans un renfoncement périphérique (12) de la gaine de garniture (4), et **en ce que** cette douille (9) est déplaçable depuis l'extérieur, de préférence au moyen de vis de serrage (16) attaquant parallèlement à l'axe (14) et réparties à la périphérie, avec évasement radial axialement par rapport à la gaine de garniture (4).

3. Garniture d'étanchéité annulaire selon l'une ou l'autre des revendications 1 et 2, **caractérisée en ce que** pour une gaine de garniture (4) composée par plusieurs parties de gaine (17, 17') sensiblement en forme de disque, la douille de transfert thermique (9) est agencée sur une partie de gaine (17') médiane, présentant de préférence un rayon inférieur à celui des parties de gaine voisines (17).

4. Garniture d'étanchéité annulaire selon l'une ou plusieurs des revendications 1 à 3, **caractérisée en ce que** la gaine de garniture (4) et la douille de transfert thermique (9) sont constituées en matériau bon conducteur de chaleur, de préférence en alliages de cuivre.

5. Garniture d'étanchéité annulaire selon l'une ou plusieurs des revendications 1 à 4, **caractérisée en ce que** la douille de transfert thermique (9) est agencée à la périphérie extérieure (7) de la gaine de garniture (4) de manière à être voisine, dans l'état monté de la garniture (1), d'une zone (8) refroidie séparément de la paroi de presse-étoupe (6).
